(19) Europäisches Patentamt
European Patent Office
Office européen des brevets

(11) **EP 2 538 399 A1**

(12) **DEMANDE DE BREVET EUROPEEN**

(43) Date de publication:
**26.12.2012 Bulletin 2012/52**

(51) Int Cl.:
***G09B 23/32*** *(2006.01)*

(21) Numéro de dépôt: **12184876.6**

(22) Date de dépôt: **20.10.2009**

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **20.10.2008 FR 0857128**

(62) Numéro(s) de document de la (des) demande(s)
initiale(s) en application de l'article 76 CBE:
**09173554.8 / 2 178 066**

(71) Demandeur: **Generale Biscuit
94150 Rungis (FR)**

(72) Inventeurs:
• **Aymard, Pierre
92160 Antony (FR)**
• **Wahl, Robin
91430 Igny (FR)**

(74) Mandataire: **Cabinet Plasseraud
52, rue de la Victoire
75440 Paris Cedex 09 (FR)**

Remarques:
Cette demande a été déposée le 18-09-2012 comme
demande divisionnaire de la demande mentionnée
sous le code INID 62.

(54) **Méthode in vitro modélisant et mesurant la consistance générée in vivo par un aliment au cours de sa digestion**

(57) La présente invention a pour objet une méthode *in vitro* modélisant et mesurant la consistance générée *in vivo* par un aliment au cours de sa digestion, comprenant les étapes suivantes :

a. Broyage de l'aliment pour reproduire la dégradation mécanique opérée au cours de la mastication,

b. Mélange sous agitation de l'aliment broyé à une solution modélisant le fluide gastrique dans la cuve d'un réacteur couplée à un rhéomètre, pendant une durée correspondant à la digestion gastrique,

c. Ajustement sous agitation du mélange réactionnel pour modéliser les conditions de digestion intestinale pendant une durée correspondant à la digestion intestinale,

le rhéomètre étant muni d'un agitateur permettant d'homogénéiser le mélange et d'en mesurer la viscosité et/ou la viscoélasticité.

EP 2 538 399 A1

**Description**

La présente invention a pour objet une méthode de mesure *in vitro* de la consistance générée par un aliment au niveau de l'estomac et de l'intestin grêle.

La digestion est un mécanisme complexe, qui commence par la dégradation mécanique et chimique des nutriments dans la bouche. La salive contient des enzymes qui débutent la digestion, des agents qui empêchent la prolifération de bactéries et lubrifient les aliments pour faciliter la déglutition. La nourriture mastiquée descend jusque dans l'estomac grâce aux mouvements péristaltiques (contractions rythmées) de l'oesophage.

Dans l'estomac, qui peut contenir jusqu'à environ deux litres de nourriture, les aliments sont mélangés aux sécrétions gastriques contenant de l'acide chlorhydrique et des enzymes protéolytiques telles que la pepsine, qui poursuivent le processus de dégradation.

Le contenu de l'estomac, appelé chyme acide, est vidangé selon une cinétique sigmoïdale, dans l'intestin grêle, où le pH remonte à des valeurs proches de la neutralité. Long de plus de 6 mètres, l'intestin grêle est le principal organe de digestion et assure la plus grande partie de l'absorption des nutriments dans la circulation sanguine. Le chyme, ou bol, transitera ensuite vers le gros intestin.

L'augmentation de la consistance du bol au niveau gastrique est susceptible de ralentir la vidange gastrique et d'augmenter la durée de diffusion des nutriments au niveau intestinal ce qui participerait à la sensation de satiété. Il a par exemple été montré que l'augmentation de la consistance du bol alimentaire, épaissi ou gélifié par des fibres texturantes induit une distension gastrique, générant ainsi une sensation de satiété (Hoad CL, Rayment P., Spiller RC, Marciani L., de Celis Alonso B., Traynor C., Mela D.J., Peters H.P.F. and Gowland P.A.,(2004): In vivo imaging of intragastric gelation and its effect on satiety in humans. J. Nutr: 2293-2300). Au niveau intestinal, il a été montré que la modification de la consistance du chyme prolonge la diffusion des nutriments et réduit notamment la vitesse d'apparition postprandiale du glucose, induisant une limitation du pic de glycémie et d'insulinémie. Une relation entre l'augmentation de la viscosité, par exemple d'une boisson enrichie en fibres, et la diminution de la glycémie et de l'insulinémie postprandiale a été montrée par Edwards et al en 1987 (Edwards C.A., Craigen L., Davison P., Tomlin J., Sugden K., Johnson I.T. and Read W., Viscosity of food gums determined in vitro related to their hypoglycaemic actions. Am J Clin Nutr; 7).

Il semble donc qu'un contrôle de la consistance du bol alimentaire au cours de la digestion influe sur la réponse glycémique et/ou insulinémique, et permette de prolonger la sensation de satiété, c'est-à-dire retarder l'apparition de la sensation de faim.

Pour les produits alimentaires visant à diminuer la réponse glycémique ou insulinémique et/ou à prolonger le sentiment de satiété, il est donc primordial de connaître l'évolution de la consistance du bol alimentaire au cours des premières étapes de la digestion (gastrique et intestinale). Il est également important de s'assurer, avant toute commercialisation, que l'augmentation de consistance générée par l'ingestion de l'aliment ou encore la taille des particules de l'aliment n'augmente pas de manière trop importante dans le tractus gastro-intestinal, ce qui entrainerait également des risques potentiels d'occlusion pour le consommateur.

Les mesures de viscosité du bol alimentaire pendant la digestion s'effectuent *in vivo* au moyen de sondes introduites par les voies nasales et descendant jusqu'à l'estomac. Ces méthodes sont d'une part très inconfortables pour le sujet, et ne permettent par ailleurs pas de mesurer l'évolution de la viscosité du bol au-delà de l'estomac, et notamment au niveau de l'intestin, constituant pourtant une étape majeure de la digestion. Une autre méthode *in vivo* consiste à introduire des traceurs dans les nutriments pour suivre leur vitesse de digestion. Ces traceurs donnent une vitesse globale de digestion entre l'absorption par la bouche et la défécation, mais ne permettent pas de connaître la viscosité du bol alimentaire dans l'estomac et dans l'intestin. En outre, ces méthodes *in vivo* deviennent vite fastidieuses et coûteuses lorsque leurs résultats doivent être validés sur un panel de plusieurs dizaines de sujets pour être représentatifs.

Certains modèles *in vitro* extrêmement complexes ont été développés, tels que par exemple un modèle se basant sur un système dynamique et multi-compartimenté (estomac, duodénum, jéjunum et iléon) piloté et contrôlé en continu par ordinateur, décrit dans le brevet US 5,525,305 déposé par la société Nederlandse Organisatie voor Toegepast-Natuurwetenschappelijk Orderzoek TNO. Ce procédé reproduit dans des conditions les plus physiologiques possibles, en terme de temps et de conditions de pH notamment, les mouvements péristaltiques, les sécrétions d'enzymes digestives, le transit intestinal et l'absorption des produits de digestion et permet de donner des informations sur le devenir chimique des aliments au cours de la digestion (par exemple, vitesse d'apparition des sucres) ou sur la survie de certains composants (tels que les bactéries probiotiques) dans le tractus gastro-intestinal.

Ce dispositif dynamique et multi-compartimenté n'inclut cependant pas la détermination de la viscosité du bol alimentaire. Il est donc nécessaire de réaliser des prélèvements occasionnels d'échantillons et d'effectuer une mesure déportée sur un viscosimètre ou rhéomètre. Cependant, le prélèvement d'échantillons dans ce type de système perturbe la simulation du processus de digestion, générant une variation de volume qui peut être significative par rapport au volume circulant ou encore perturber la régulation de pH. En outre, la présence de particules de grosse taille au sein de l'aliment pose des problèmes de mesure rhéologique, les viscosimètres fonctionnant avec un entrefer fin (entre 50 microns et 0.5 cm) ne pouvant accommoder des particules macroscopiques.

Par conséquent, un tel procédé est non seulement difficile et coûteux à mettre en oeuvre, mais il ne permet pas de mesurer la viscosité gastrique et intestinale de manière continue, nécessaire pour anticiper les effets *in vivo* de certains nutriments ingérés, en particulier les polysaccharides non digestibles, sur les réponses glycémiques et insulinémiques et sur la satiété.

Il existe donc un besoin pour un procédé *in vitro* simple et reproductible de prévision de l'évolution de la consistance du bol alimentaire au cours des principales phases de la digestion, et qui soit représentatif des conditions physiologiques *in vivo.*

La présente invention propose donc un modèle *in vitro* de mesure en continu de l'évolution de la consistance générée par un aliment au niveau de l'estomac et de l'intestin grêle.

En effet, les méthodes connues de mesure de viscosité d'un mélange fluide, c'est-à-dire s'écoulant sous son propre poids, imposent un arrêt de l'agitation pour mesurer la viscosité afin, d'une part de ne pas perturber la mesure de viscosité et d'autre part de prévenir tout choc éventuel entre l'appareil de mesure de la viscosité et l'agitateur, ces deux appareils étant souvent fragiles et/ou coûteux. Il n'est donc pas possible, sur la base des dispositifs connus de mesure de la viscosité, de mesurer de manière continue l'évolution de la viscosité d'un mélange - par exemple par l'ajout de nouveaux composés ou modifications des conditions opératoires - sans interrompre l'agitation dudit mélange. Seule une succession de mesures ponctuelles de viscosité peut être obtenue, entrainant un décalage entre l'évolution de la viscosité réelle du mélange et l'évolution de la viscosité mesurée *in vitro.* De plus, dans le cas d'un mélange biphasique, tel des particules solides partiellement hydrophiles dispersées dans un liquide, et dont la solubilisation est progressive, il n'est pas possible de mesurer la viscosité dès les premières étapes du processus de digestion dans la mesure où le mélange est trop hétérogène et le prélèvement non représentatif. Il convient donc d'attendre que le mélange obtienne une consistance relativement homogène afin d'opérer un prélèvement, ce qui ne permet pas de suivre l'intégralité de la cinétique mais seulement de caractériser la phase finale.

L'invention a donc pour objet, selon un premier aspect, une méthode *in vitro* modélisant et mesurant l'évolution de la consistance générée in vivo par un aliment au cours de sa digestion, comprenant les étapes suivantes :

a. Broyage de l'aliment pour reproduire la dégradation mécanique opérée au cours de la mastication,
b. Mélange sous agitation de l'aliment broyé à une solution modélisant le fluide gastrique dans la cuve d'un réacteur couplé à un rhéomètre, pendant une durée correspondant à la digestion gastrique,
c. Ajustement sous agitation du mélange réactionnel pour modéliser les conditions de digestion intestinale pendant une durée correspondant à la digestion intestinale,

le rhéomètre étant muni d'un agitateur permettant d'homogénéiser le mélange et d'en mesurer la viscosité et/ou la viscoélasticité.

Lorsque l'on mesure la viscosité du mélange, le rhéomètre homogénéise le mélange et en mesure la viscosité de manière simultanée.

Lorsque l'on mesure la viscoélasticité du mélange, le rhéomètre homogénéise le mélange et en mesure la viscoélasticité de manière consécutive.

Par « de manière simultanée », on entend, au sens de la présente demande, que l'agitateur permet à la fois la mesure de la viscosité et/ou de la viscoélasticité, et l'agitation, et conduit les deux opérations en même temps.

Par « de manière consécutive », on entend, au sens de la présente demande, que l'agitateur conduit dans un premier temps l'agitation, puis mesure dans un second temps la viscoélasticité.

Par « aliment », on entend, au sens de la présente demande, un ingrédient alimentaire seul ou tout produit alimentaire comprenant plusieurs ingrédients alimentaires.

En particulier, l'invention a pour objet une méthode *in vitro* modélisant et mesurant la consistance générée *in vivo* par un aliment au cours de sa digestion, comprenant les étapes suivantes :

a. Broyage de l'aliment jusqu'à obtention de particules de taille moyenne comprise entre 5 $\mu$m et 3000 $\mu$m;
b. Préparation d'une solution modélisant le fluide gastrique comprenant de l'eau maintenue à un pH acide compris entre 1 et 4 et une enzyme protéolytique par exemple de type pepsine, ladite enzyme étant présente en une teneur allant de 0,025 à 2,5 % en poids de la solution de fluide gastrique ;
c. Mélange sous agitation de l'aliment obtenu en a. à la solution obtenue en b. dans la cuve d'un réacteur couplée à un rhéomètre, pendant une durée allant de 30 minutes à 4 heures, ledit réacteur étant maintenu à une température comprise entre 35 et 40°C , de préférence de 36 et 38°C;
d. Ajustement du pH dans le réacteur jusqu'à une valeur comprise entre 5 et 7,5 et ajout de 0,03 à 3 % en poids de sels biliaires et de 0,04 à 4 % en poids de pancréatine, ces pourcentages étant exprimés en poids par rapport au poids du mélange contenu dans la cuve du réacteur, et maintien du mélange sous agitation pendant une durée allant de 1 à 8 heures, de préférence de 1 à 4 heures,

le rhéomètre est équipé d'un agitateur permettant d'homogénéiser le mélange et d'en mesurer la viscosité et/ou la viscoélasticité.

Par consistance générée « in vivo » par un aliment au cours de sa digestion on entend, au sens de la présente demande, la consistance générée par un aliment au cours de sa digestion chez un mammifère monogastrique, et de préférence chez l'homme. Lorsque l'aliment est liquide la consistance est évaluée par une mesure de viscosité et/ou de viscoélasticité. Lorsque l'aliment est viscoélastique, la consistance est évaluée par une mesure de viscoélasticité.

L'eau utilisée dans le cadre de la présente invention peut notamment être de l'eau déminéralisée. Pour reproduire plus fidèlement les conditions physiologiques, on peut optionnellement ajouter à l'eau différents sels usuellement présents dans les fluides physiologiques tels que du chlorure de sodium.

Suivi de l'évolution de la consistance du bol

La méthode selon la présente invention permet une mesure in vitro modélisant et mesurant en continu la consistance générée in vivo par un aliment au cours de sa digestion, et notamment au cours du passage dans l'estomac et l'intestin grêle.

Lorsque le bol alimentaire reste globalement liquide au cours des phases gastro-intestinales, la méthode selon l'invention permet de mesurer l'évolution de la viscosité au cours du temps, à vitesse de cisaillement et température constantes. La viscosité est définie comme la résistance à l'écoulement d'un liquide.

En régime permanent d'écoulement de cisaillement, la viscosité (en Pa.s) est définie comme le rapport entre la contrainte de cisaillement (en Pa) et la vitesse de cisaillement (en $s^{-1}$) :

$$\text{Viscosité de cisaillement} = \text{contrainte de cisaillement} / \text{vitesse de cisaillement.}$$

Les fluides simples constitués de petites molécules ou les solutions diluées de macromolécules ont un comportement dit Newtonien, c'est-à-dire que la viscosité ne dépend que de la température.

Les fluides plus complexes, dits non-Newtoniens, voient leur viscosité également varier en fonction de la vitesse de cisaillement et/ou du temps de mesure. On ne peut plus simplement définir une valeur unique de viscosité (à une température donnée), mais on parle de « viscosité apparente », dépendante des conditions de mesure. Dans ce cas, pour connaître le comportement d'un tel fluide, il convient de réaliser une courbe d'écoulement, c'est-à-dire mesurer la viscosité à différentes vitesses de cisaillement ; ce peut être fait dans le cadre de l'invention.

Dans le cas où l'aliment contiendrait des composants induisant une texturation du bol alimentaire, par exemple des gélifiants fonctionnels dans les conditions gastro-intestinales - c'est-à-dire des composés développant des propriétés gélifiantes lorsqu'ils sont dans les conditions de température, pH et de salinité du tractus gastro-intestinal - la mesure de la viscosité par cisaillement tend à casser la structure en cours de formation. Dans ce cas, un mode de réalisation particulier consiste à substituer l'agitation en phase gastrique ou intestinale, servant à la mesure de la viscosité, par des mesures oscillatoires à très faible déformation, permettant de laisser le bol se structurer quasiment au repos. De telles mesures sont connues pour permettre la détermination des modules viscoélastiques G' (module élastique, relatif à la partie solide) et G" (module visqueux, relatif à la partie liquide), comme décrit notamment dans la publication de Steffe, J. F, 1992, Rheological Methods in Food Process Engineering, Second Edition, Freeman Press, USA.

En pratique, la déformation pouvant être imposée est comprise entre 0,01 % à 1%, de préférence 0,1 %, avec une fréquence de 0,01 Hz à 10 Hz, de préférence environ 1Hz.

La pale (ou l'agitateur) exerce donc des mouvements oscillatoires de très faible amplitude, ce qui ne perturbe pas la structuration du bol alimentaire. Il est ainsi possible de suivre une gélification se produisant au sein du bol, par exemple initiée par des interactions ioniques entre chaînes de polymères (polysaccharides ou protéines) chargées et des sels spécifiques.

Si la gélification a lieu en phase gastrique, la méthode in vitro selon l'invention modélisant et mesurant la consistance générée in vivo par un aliment au cours de sa digestion, comprend les étapes suivantes :

a. Broyage de l'aliment jusqu'à obtention de particules de taille moyenne comprise entre 5 $\mu$m et 3 mm ;

b. Préparation d'une solution modélisant le fluide gastrique comprenant de l'eau maintenue à un pH acide compris entre 1 et 4 et une enzyme protéolytique par exemple de type pepsine, ladite enzyme étant présente en une teneur allant de 0,025 à 2,5 % en poids de la solution de fluide gastrique ;

c. Mélange de l'aliment obtenu en a. à la solution obtenue en b. dans la cuve d'un réacteur jusqu'à obtention d'un mélange homogène,

d. Mesure de la viscoélasticité du mélange, pendant une durée allant de 30 minutes à 8 heures, ledit réacteur étant maintenu à une température comprise entre 36 et 38°C ;

l'appareil permettant la mesure de la viscoélasticité du mélange produisant une déformation sinusoïdale comprise entre 0,01% et 1%, de préférence 0,1%, et une fréquence de 0,01 Hz à 10 Hz, de préférence environ 1Hz.

Dans le cas d'une gélification en phase gastrique, conduisant à l'obtention d'un mélange viscoélastique à solide, le test ne peut être poursuivi en conditions intestinales, la phase de mélange nécessaire à l'obtention des conditions intestinales étant rendue impossible par la structure viscoélastique à solide du bol gastrique.

Si la gélification a lieu en phase intestinale, la méthode *in vitro,* selon l'invention modélisant et mesurant la consistance générée *in vivo* par un aliment au cours de sa digestion, comprend les étapes suivantes :

a. Broyage de l'aliment jusqu'à obtention de particules de taille moyenne comprise entre 5 $\mu$m et 3 mm ;

b. Préparation d'une solution modélisant le fluide gastrique comprenant de l'eau maintenue à un pH acide compris entre 1 et 4 et une enzyme protéolytique par exemple de type pepsine, ladite enzyme étant présente en une teneur allant de 0,025 à 2,5 % en poids de la solution de fluide gastrique ;

c. Mélange sous agitation de l'aliment obtenu en a. à la solution obtenue en b. dans la cuve d'un réacteur couplée à un appareil de mesure de la viscosité, pendant une durée allant de 30 minutes à 4 heures, ledit réacteur étant maintenu à une température comprise entre 36 et 38°C ;

d. Ajustement du pH dans le réacteur jusqu'à une valeur comprise entre 5 et 7,5 et ajout de 0,03 à 3 % en poids, de sels biliaires et de 0,04 à 4 % en poids de pancréatine, ces pourcentages étant exprimés en poids par rapport au poids du mélange contenu dans la cuve du réacteur, et maintien du mélange sous agitation jusqu'à obtention d'un mélange homogène ;

e. Mesure de la viscoélasticité du mélange, pendant une durée de 30 minutes à 8 heures, ledit réacteur étant maintenu à une température comprise entre 36°C et 38°C

l'appareil permettant la mesure de la viscosité à l'étape c. étant muni d'un agitateur permettant d'homogénéiser le mélange et d'en mesurer la viscosité-et la mesure de la viscoélasticité à l'étape e. en effectuant une déformation sinusoïdale comprise entre 0,01% et 1%, de préférence 0,1%, et une fréquence de 0,01 Hz à 10 Hz, de préférence environ 1Hz.

Pour compléter la présente méthode, dans le cas d'un suivi de viscosité, il est intéressant de réaliser des courbes d'écoulement du bol alimentaire aux phases gastrique et intestinale qui permettront d'évaluer le caractère fluide, rhéo-fluidifiant ou éventuellement thixotrope du bol alimentaire.

Ces courbes d'écoulement sont bien connues de l'homme de l'art.

La vitesse de cisaillement (ou la contrainte) est progressivement augmentée (avec un pas linéaire ou logarithmique) et la viscosité correspondante est mesurée. Ensuite, la vitesse ou contrainte est progressivement diminuée et la viscosité est mesurée. La courbe de la viscosité obtenue en fonction de la vitesse est appelée rhéogramme. Un rhéogramme « plat », avec une viscosité constante, indique que le fluide est Newtonien.

Une diminution de la viscosité avec la vitesse de cisaillement indique un caractère rhéo-fluidifiant, souvent lié à des phénomènes d'orientation et -dans le cas de composés polymères- de désenchevêtrement des chaînes dans le champ de cisaillement. Une chute importante de viscosité pouvant atteindre deux ou trois ordres de grandeur peut ainsi être observée en augmentant progressivement la vitesse de cisaillement.

Une augmentation de viscosité avec la vitesse de cisaillement peut indiquer un comportement rhéo-épaississant, pouvant être lié à l'existence d'agrégation ou de bloquage de l'écoulement s'opérant dans le champ de cisaillement, ou la sortie du régime laminaire d'écoulement, conduisant à la formation de turbulences locales qui augmentent la valeur de viscosité apparente.

Le caractère thixotrope est quant à lui évalué par comparaison de la courbe d'écoulement « aller » et de la courbe d'écoulement «retour». Un décalage significatif entre les deux courbes aller et retour indique la présence d'une structuration partielle du fluide initial, qui est effacée, souvent réversiblement, par le cisaillement perçu.

Selon un mode préféré de réalisation, l'appareil permettant la mesure de la viscosité apparente ou de la viscoélasticité du mélange est un rhéomètre haute performance à palier à air de type MCR300, MCR301 et MCR500, commercialisés par la société Anton Paar-Physica.

Le rhéomètre est équipé d'un agitateur (ou sonde, ou pale) présentant une géométrie permettant l'homogénéisation du mélange dans lequel elle est introduite.

En particulier, l'agitateur peut se présenter sous forme d'hélice ou d'ancre pour éviter la sédimentation ou au contraire le crémage de grosses particules dans le mélange, de manière telle que le milieu soit le plus homogène possible. Des exemples d'agitateurs sont notamment ceux commercialisés par la société Anton Paar GmbH, sous les références ST 24-2HR-37/120 ; ST 24-2HR-37/106 ; ST 39-2HR-50/152 ; ST 60-2HR-90/188.5 (Anton Paar, Accessory Catalog 2009). De préférence, l'agitateur pouvant être utilisé dans le cadre de la présente invention est le ST 60-2HR-90/188.5.

L'agitateur peut notamment être calibré en utilisant la procédure décrite par Aït et al (Ait-Kadi, A., Marchal, Ph., Choplin, L., Chrissemant, A.S. and Bousmina, M.L, 2002, Canadian Journal of Chemical Engineering, vol 80, 6, 1166-1174).

Le principe de cette calibration consiste à évaluer pour chaque agitateur les constantes K tau (reliant la contrainte de cisaillement et le couple résistant) et K gamma (reliant la vitesse de cisaillement et la vitesse de rotation). Cette évaluation est réalisée par recours à des fluides modèles, Newtonien ou rhéofluidifiant, dont les paramètres rhéologiques sont mesurés sur un viscosimètre ou rhéomètre équipé d'une géométrie conventionnelle de type cylindre coaxial. L'analogie entre les mesures effectuées sur le fluide modèle avec la géométrie conventionnelle et le nouvel agitateur permet de déterminer les deux constantes K tau et K gamma avec une incertitude de l'ordre de 10%. Ces constantes sont ensuite insérées dans le logiciel du rhéomètre, qui peut ensuite être piloté par la vitesse ou contrainte de cisaillement, conformément à un fonctionnement normal.

Selon un mode préféré de réalisation, le rhéomètre possède un couple maximal au moins égal à 150 mNm et un couple minimum inférieur ou égal à 0,25 microNm.

Le rhéomètre peut notamment être couplé à un ordinateur équipé d'un logiciel d'acquisition de données US 200, ledit logiciel permettant de :

- piloter le rhéomètre de manière automatisée, c'est-à-dire que les différents événements d'agitation (à une vitesse définie et pendant un temps donné) mentionnés plus haut ne nécessitent pas l'intervention d'un opérateur
- d'enregistrer toutes les données afin d'en effectuer une analyse complète et différée.

L'addition d'eau, d'acide ou de base pour ajuster le pH aux différentes étapes du procédé, et d'enzymes nécessaires à la reproduction des fluides gastriques et intestinaux peut être effectuée manuellement ou pilotée de manière automatique par une station de titrage.

Lorsque l'addition s'effectue manuellement, les enzymes peuvent être ajoutées sous forme de poudre (qui se dissolvent ensuite dans le contenu de la cuve) ou sous forme de solutions préalablement préparées en pesant de manière précise les poudres (enzymes, sels et éventuellement sels biliaires) et en les dispersant à température ambiante et sous agitation douce dans la quantité d'eau déminéralisée souhaitée (également pesée avec précision) pour obtenir les concentrations d'enzymes souhaitées. Afin de limiter au maximum la dilution de la phase gastrique modélisée, les solutions d'enzymes gastriques comprennent, de préférence, une teneur en enzymes comprise entre 10% et 50% en poids, par rapport au poids de ladite solution, Afin de limiter au maximum la dilution de la phase intestinales modélisée, les es solutions d'enzymes intestinales comprennent, de préférence, une teneur en enzymes comprise entre 10% et 30% en poids, par rapport au poids de ladite solution.

Lorsque l'addition s'effectue automatiquement, les éléments ajoutés (eau, acide, base, enzymes) sont, de préférence, sous forme de solutions préparées préalablement. Dans ce cas, le dosage des quantités des éléments ajoutés est effectué à l'aide d'une station de titrage, qui permet d'ajuster automatiquement le pH et d'enregistrer sa valeur durant toute la durée de l'expérience.

Selon un mode préféré de réalisation, l'agitateur permettant d'homogénéiser le mélange et d'en mesurer la viscosité se compose d'au moins une pale hélicoïdale (1) entraînée en rotation autour d'un axe vertical (2), correspondant à celui de la cuve d'un réacteur et d'une barre de support (3) et perpendiculaire à l'axe, située à l'extrémité inférieure dudit axe.

Par hélicoïdale, on entend que la pale présente la forme par exemple d'un escalier spiralé et non la forme d'une courbe qui commence en un point central puis s'en éloigne de plus en plus, en même temps qu'elle tourne autour.

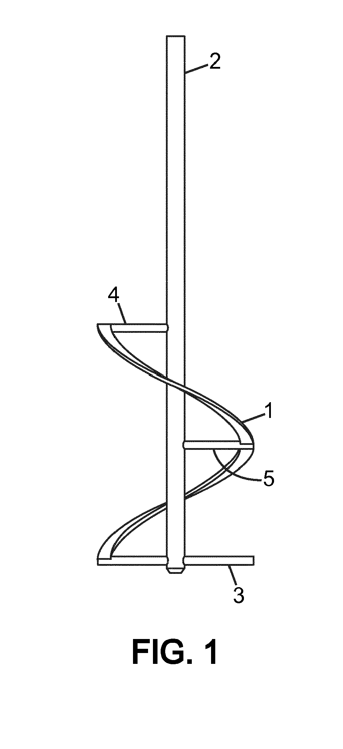

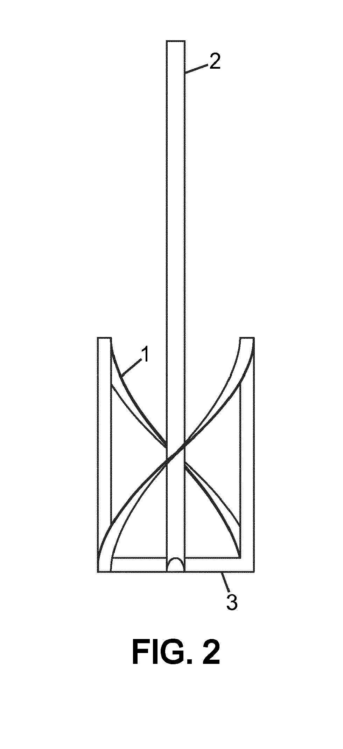

Selon un mode préféré de réalisation illustré aux figures 1 et 2, l'agitateur comprend au moins deux pales hélicoïdales coaxiales, disposées de manière symétrique par rapport à l'axe vertical. En particulier, l'agitateur peut comprendre entre 2 et 6 pales hélicoïdales, par exemple 2, 3 ou 4 pales.

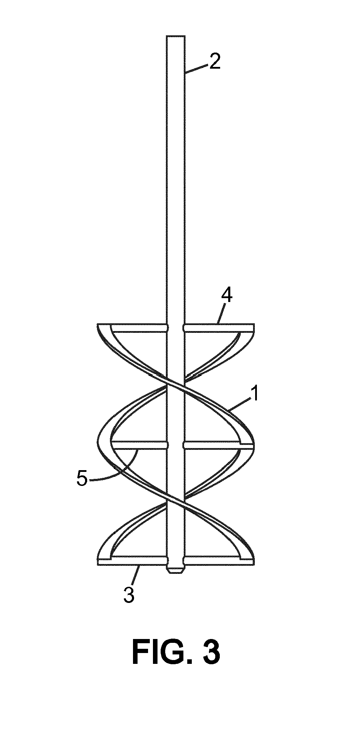

La ou chacune des pales hélicoïdales peu(ven)t comprendre entre un demi (figure 2) -soit rotation de 180°- et plusieurs pas ou spires d'hélice, par exemple deux ou trois pas, de préférence 1 pas (figures 1 et 3) - rotation de 360°. L'augmentation du nombre de pas d'hélice constituant l'agitateur peut notamment permettre d'augmenter le cisaillement du mélange et/ou l'aptitude au pompage de la géométrie de l'agitateur, ce qui peut notamment être utile lorsque le mélange est visqueux et/ou concentré en particules.

Une pale hélicoïdale (1) peut être constituée de tiges plates (comme représenté sur les figures 1 à 3), incurvées ou semi-hélicoïdales, voire de tiges circulaires. En particulier, les tiges constituant la pale peuvent être métalliques, et présenter, en combinaison, avec cette caractéristique ou non, une épaisseur comprise entre 1 et 3 mm et une largeur comprise entre 2 et 8 mm.

Selon un mode préféré de réalisation, une pale hélicoïdale (1) n'est pas en contact avec l'axe vertical, ce qui permet au mélange réactionnel de circuler entre l'axe et la pale.

Lorsqu'elle est entraînée en rotation, une pale hélicoïdale crée une aspiration qui tend à déplacer le mélange réactionnel vers le haut de la cuve du réacteur (ou pompage vertical du mélange réactionnel), ce qui améliore l'efficacité du mélange, en particulier lors des phases de dispersion des poudres (aliment broyé, enzymes) ou des liquides (acide et soude concentrés) dans l'eau.

L'extrémité inférieure de la pale hélicoïdale est fixée à la barre de support radiale (3), et notamment à l'une des extrémités de la barre de support radiale.

Pour renforcer la structure de l'agitateur, l'extrémité supérieure de la ou des pales (1) peut être fixée à une seconde barre radiale (4), parallèle à la barre de support radiale (3).

En particulier, lorsque l'agitateur comprend deux pales hélicoïdales coaxiales (figure 2 ou 3), symétriques par rapport à l'axe vertical (2), lesdites pales (1) sont connectées entre elles au niveau de leur extrémité inférieure par la barre de support (3). Dans le cas du dispositif de la figure 3, les pales sont également connectées au niveau de leur extrémité supérieure par la seconde barre radiale (4), parallèle à la barre de support. L'épaisseur de ces barres de support peut être comprise entre 1 mm et 3mm.

Selon un mode particulier de réalisation, l'agitateur comprend deux pales hélicoïdales coaxiales (figure 3), symétriques par rapport à l'axe vertical (2), formant une spire d'hélice, connectées entre elles au niveau de leur extrémité inférieure par la barre de support (3), au niveau de leur extrémité supérieure par la seconde barre radiale (4), parallèle à la barre de support (3), et à hauteur d'une demi-spire, par une troisième barre (5) parallèle à la barre de support.

L'ensemble de la géométrie peut de préférence être réalisé en acier inoxydable pour résister aux conditions modélisées, et résister à la déformation dans le cas de fluides visqueux. De préférence encore, la géométrie est réalisée à l'aide de soudures et avantageusement possède des soudures non débordantes, de manière à ne pas générer localement de turbulences ce qui fausserait la mesure de viscosité.

L'axe vertical (2) peut notamment être cylindrique, et présenter un diamètre compris entre 5 et 9 mm.

La barre de support radiale (3) peut être constituée de lames plates, incurvées ou semi-hélicoïdales, voire de tiges circulaires. Cette barre de support radiale permet, lorsqu'elle est entraînée en rotation, de prévenir la sédimentation du mélange réactionnel.

Préférentiellement, la ou les pales hélicoïdales s'étend sur sensiblement la totalité de la hauteur et/ou du diamètre de l'enceinte réactionnelle à laquelle elle est destinée. De même, la barre de support radiale s'étend sur sensiblement la totalité du diamètre de l'enceinte.

La rigidité de la pale (ou de l'agitateur) est importante pour ne pas générer d'artefacts de mesure de viscosité.

En particulier, le volume occupé par la ou les pales (correspondant au volume du cylindre qui circonscrit la pale) représente 30 à 70% du volume de la cuve, de préférence de 35 à 60%, plus préférentiellement de 35 à 50 % et plus préférentiellement encore de l'ordre de 40%.

En particulier, le volume occupé par la ou les pales (correspondant au volume cylindre qui circonscrit la pale) représente 30 à 80% du volume du mélange, de préférence de 40 à 70%, plus préférentiellement de 50 à 65 % et plus préférentiellement encore environ 60%.

De même, la barre de support radiale occupe sensiblement la totalité du diamètre de l'enceinte à laquelle elle est destinée, et de préférence entre 70 et 95 % du diamètre de la cuve, plus préférentiellement environ 85% du diamètre de la cuve.

La barre de support radiale peut être constituée de lames plates, incurvées ou semi-hélicoïdales, voire de tiges circulaires. Cette barre de support radiale permet, lorsqu'elle est entraînée en rotation, de prévenir la sédimentation du mélange réactionnel.

Selon un mode préféré de réalisation, le mélange selon l'invention est fluide, c'est-à-dire s'écoule sous son propre poids, et notamment présente une texture de fluide à visqueuse.

La cuve peut également posséder une double enveloppe afin de contrôler la température du mélange, et éviter tout échauffement, notamment dans les phases d'agitation forte ou les courbes d'écoulement. De préférence, cette cuve peut également être transparente, de manière à permettre la visualisation du mélange, la prise de photographies ou de films. Selon un mode de réalisation préféré, la cuve peut être une cuve double enveloppe en verre, dite unité de tempérage, telle que proposée par les sociétés Bercauverre, Finemech (référence type T ou TGL) ou Cole Parmer (référence WU-03773-20). L'homme du métier ajustera la taille de la cuve à la taille de la pale utilisée de manière à éviter au maximum les volumes de fluides « morts » (c'est-à-dire qui ne sont pas accessibles pour la pale et ne sont pas soumis à l'agitation) tout en évitant de faire déborder la cuve.

Modélisation des étapes de digestion gastrique et intestinales

La méthode selon l'invention propose un modèle *in vitro* de mesure en continu de la consistance générée par un aliment au cours des étapes de digestion gastrique et intestinale.

Pour cela, il convient de reproduire la digestion mécanique de la bouche, le fluide gastrique et les conditions intestinales.

Reproduction de la dégradation mécanique opérée au cours de la mastication

La dégradation mécanique qui se produit dans la bouche peut être reproduite par un broyage de l'aliment préalable à toute mesure de la viscosité.

Le produit broyé peut être mélangé à de l'eau ou à une solution modélisant la salive pour s'approcher le plus possible des conditions in vivo.

Cependant, le mélange avec une solution aqueuse peut générer une pâte compacte difficile à disperser lors de la modélisation des phases ultérieures de la digestion. C'est notamment le cas des produits solides secs ou faiblement humides comprenant des composants ayant une forte capacité de rétention d'eau, tels que des fibres viscosifiantes. Pour ces aliments, le broyage à sec est préféré.

Dans le cas d'aliments secs c'est-à-dire présentant une teneur en eau inférieure ou égale à 5% en poids, par rapport au poids total de la composition, le broyage permet notamment d'obtenir un aliment sous forme de particules présentant une taille d'au moins 5 μm, de préférence comprise entre 5 μm et 3000 μm, avec une médiane allant de préférence de 200 à 800 μm, et plus préférentiellement environ 500 μm.

Un tel broyage peut notamment être effectué au moyen d'un mixeur ménager par exemple vendu sous la référence Rondo 500 par la société SEB.

Dans le cas d'aliments « humides » c'est-à-dire présentant une teneur en eau supérieure à 5% en poids, par rapport au poids total de la composition, la modélisation de la digestion mécanique de la bouche peut également être obtenue par broyage de l'aliment. Les particules obtenues sont plus grossières que celles résultant du broyage d'aliments secs, et peuvent notamment présenter une taille d'au moins 5 μm de préférence allant de 500 à 2000 μm, de préférence allant de 700 à 1500 μm, et plus préférentiellement de l'ordre de 1000 μm.

Enfin, dans le cas d'aliments fluides tels que des boissons, l'étape de broyage est inutile, et n'est pas effectuée.

A titre indicatif, l'aliment sec ou humide peut représenter entre 50 et 200 g pour un volume de phase gastrique allant de 250 à 400 mL. De même, des ingrédients ou matières premières en poudre peuvent être analysés avec ce dispositif, auquel cas les quantités sont plutôt de l'ordre de 1 à 200g de poudre pour un volume de phase gastrique de 250 mL à 450 mL. L'homme du métier ajustera ces valeurs pour que l'aliment puisse être dispersé dans le liquide gastrique, sans toutefois faire déborder le réacteur au moment de l'agitation.

Selon un mode préféré de réalisation, la méthode selon l'invention permet de modéliser in vitro la consistance générée in vivo par un aliment sec au cours de sa digestion.

Modélisation de la digestion au niveau gastrique

La digestion gastrique est modélisée par l'adjonction d'une solution présentant une composition proche du fluide gastrique.

Le fluide gastrique (ou suc gastrique) sécrété par l'estomac, contient des agents comme l'acide chlorhydrique, des sels comme le chlorure de sodium et certaines enzymes, comme la pepsine qui lyse les protéines.

Des compositions modélisant le fluide gastrique sont connues de l'art antérieur. Il en va de même pour les conditions de digestion intestinale. A titre illustratif, des modèles de reproduction des conditions gastriques et intestinales ont été décrits par Englyst K. N., Hudson G. J., Englyst H. N., 2000, Encyclopedia of Analytical Chemistry., Meyers R. A. Chichester: John Wiley & Sons Ltd, 2000: 4246-4262.

De tels modèles sont extrêmement précis et peuvent s'avérer fastidieux à mettre en oeuvre, notamment par la quantité d'enzymes à mettre en oeuvre au niveau intestinal.

L'homme du métier choisira les modèles de digestion mécanique de la bouche, et de conditions gastriques ou intestinales adaptés au degré de corrélation souhaité entre le modèle in vitro et les résultats in vivo et à leur impact sur la mesure de viscosité et/ou viscoélasticité.

Il est du mérite de la société demanderesse d'avoir identifié des modèles simplifiés des conditions gastriques ou intestinales, permettant d'anticiper l'évolution de la consistance d'un aliment au cours des phases de digestion gastrique et intestinale, qui soit facile et rapide à mettre en oeuvre.

En particulier, les modèles simplifiés des conditions gastriques ou intestinales identifiés, corrélés à la méthode de suivi en continu de l'évolution de la consistance selon la présente invention, permettent, en environ 4 heures, de prévoir le comportement rhéologique de n'importe quel aliment au cours de la digestion in vivo. En outre, cette méthode peut être automatisée en grande partie voire totalement (incluant l'introduction des acides, bases, ou enzymes), et permet une mise en route simple, sans intervention humaine.

Selon un mode préféré de réalisation, l'appareil permettant l'automatisation de la modélisation des conditions gastriques et intestinales est une station de titrage Titralab 856 bi-burette associée à une (ou plusieurs) bi-burette ABU52 et une pompe péristaltique, équipements disponibles auprès de la société Radiometer Analytical SAS. Cet équipement permet notamment le pilotage automatique de 1 à 6 burettes, ainsi que l'asservissement de la pompe péristaltique servant à doser la suspension d'enzymes composée de pancréatine et de sels biliaires.

Préférentiellement, la modélisation automatique du fluide gastrique s'effectue à l'aide de 3 burettes, la première dosant directement dans la cuve la quantité exacte d'eau déminéralisée (contenant éventuellement un mélange de sels) nécessaire, la deuxième ajoutant la quantité d'acide nécessaire pour atteindre la valeur de pH cible et la troisième dosant une solution concentrée de pepsine. Ladite solution peut être tamponnée à un pH compris entre 1 et 4, de préférence environ 2 et peut comprendre une teneur en pepsine allant de 10 à 50% en poids par rapport au poids de ladite solution. Le maintien d'un pH acide permet de conserver l'activité enzymatique de la pepsine (qui est dénaturée irréversiblement au-delà d'un pH de l'ordre de 6).

De manière avantageuse, la station de titrage peut être couplée à un ordinateur équipé d'un logiciel d'acquisition de données de type TitraMaster85 Data Collector, disponible auprès de la société Radiometer Analytical SAS. Ce logiciel permet de préparer les solutions modélisant les fluides gastrique et intestinal, ainsi que de contrôler et d'enregistrer la valeur du pH du bol durant toute la durée de la digestion artificielle afin d'en effectuer une analyse complète et différée.

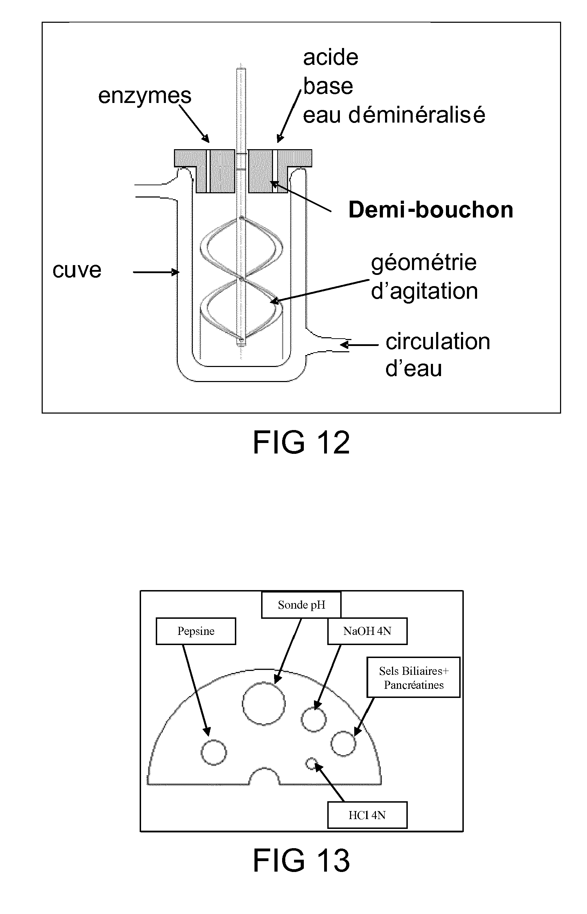

Préférentiellement, les pointes d'addition - c'est-à-dire les extrémités des tuyaux servant à transférer le contenant des burettes dans la cuve de mélange -d'acide, de base, d'eau, d'enzymes et la sonde pH peuvent être maintenues au dessus de la cuve par un couvercle en plastique, percé de trous afin d'accommoder ces différentes sondes tel qu'illustré aux figures 12 et 13. Ledit couvercle peut également permettre de limiter l'évaporation du bol ce qui aurait pour effet d'augmenter son extrait sec et de fausser la valeur de viscosité.

Les conditions gastriques peuvent être modélisées par une solution comprenant de l'eau maintenue à un pH acide compris entre 1 et 4 et une enzyme protéolytique par exemple de type pepsine, ladite enzyme étant présente en une teneur allant de 0,025 à 2,5 % en poids, par rapport au poids total de la solution.

La pepsine dégrade les protéines du bol alimentaire en hydrolysant les liaisons peptidiques des acides aminés aromatiques.

La pepsine pouvant être utilisée selon l'invention peut être une pepsine porcine telle que la Pepsine P7000 commercialisée par la société Sigma Aldrich.

Selon un mode préféré de réalisation, l'enzyme protéolytique par exemple la pepsine est présente en une teneur allant de 0,025 à 2,5 % en poids, par rapport au poids total de la solution, de préférence de 0,1 à 1,5 % en poids, et plus préférentiellement environ 0,25 % en poids.

L'eau utilisée pour modéliser les conditions gastriques est de préférence de l'eau déminéralisée, à laquelle est ajoutée entre 0.2 et 20 mg/mL de chlorure de sodium, préférentiellement 2 mg/mL. Elle est maintenue à un pH acide compris entre 1 et 4. L'acidification de la solution peut notamment être obtenue par l'adjonction de solutions acides.

Selon un mode préféré de réalisation de l'invention, l'eau est maintenue acide par l'adjonction d'une solution concentrée d'acide chlorhydrique, notamment ayant une concentration molaire de l'ordre de 4N de manière à faire varier au minimum le volume modélisant le fluide gastrique.

En particulier, le volume occupé par le mélange peut représenter entre 60 et 90 % du volume de la cuve du réacteur, de préférence entre 70 et 80%, et plus préférentiellement de l'ordre de 75% du volume de la cuve du réacteur. Le volume du mélange correspond à la somme de la partie liquide et de la partie intégrée sèche ou humide.

La modélisation de la digestion au niveau gastrique passe par un mélange de l'aliment broyé obtenu pour reproduire la digestion mécanique de la bouche, avec le fluide gastrique simplifié précédemment décrit.

Le mélange peut notamment être effectué à une vitesse de cisaillement comprise entre 10 s$^{-1}$ et 1000 s$^{-1}$, et de préférence entre 50 et 300 s$^{-1}$.

Comme expliqué précédemment, dans le cas d'un mélange biphasique, tel que la dispersion de particules solides partiellement hydrophiles dans un liquide, et dont la solubilisation est progressive, il n'est pas possible de mesurer la viscosité dès les premières étapes du processus de digestion dans la mesure où le mélange est trop hétérogène et le prélèvement non représentatif.

Il peut être préférable, selon un mode particulier de réalisation, d'augmenter sensiblement la vitesse d'agitation lors de la modélisation d'une nouvelle phase de digestion (correspondant à l'adjonction d'enzyme, d'acide ou de base), pendant une courte durée pour accélérer l'homogénéisation du mélange.

En particulier, la modélisation de l'étape de digestion au niveau gastrique comprend les étapes suivantes :

a. Préparation d'une solution modélisant le fluide gastrique comprenant de l'eau maintenue à un pH acide compris entre 1 et 4 et une enzyme protéolytique par exemple de type pepsine, ladite enzyme étant présente en une teneur allant de 0,025 à 2,5 % en poids de la solution de fluide gastrique ;
b. Broyage optionnel de l' aliment;
c. Mélange sous forte agitation, par exemple entre 50 et 300 s$^{-1}$, de l'aliment éventuellement broyé en b. à la solution obtenue en a. dans la cuve d'un réacteur couplée à un rhéomètre , pendant une durée allant de 2 à 30 minutes , ledit réacteur étant maintenu à une température comprise entre 35 à 40°C, puis ajustement du pH à la valeur cible comprise entre 1 et 4 ;
d. Mélange sous agitation, par exemple entre 1 et 100 s$^{-1}$, dans la cuve d'un réacteur couplé à un rhéomètre, pendant une durée comprise de 30 minutes à 4 heures, à une température comprise entre 36°C et 38°C.

En particulier, le mélange peut se faire au sein d'une enceinte réactionnelle (appelée réacteur), de préférence thermostatée pour maintenir le milieu gastrique à une température comprise entre 35 et 40°C, de préférence entre 36 à 39°C, et plus préférentiellement encore entre 36 et 38°C, représentative de la température de l'estomac *in vivo* chez un mammifère monogastrique, et de préférence l'homme.

Le pH est maintenu entre 1 et 4, et de préférence environ 2.

La durée de la modélisation de la digestion au niveau gastrique peut être comprise entre 30 minutes et 4 heures. La présente invention vise toutefois à proposer une méthode *in vitro* rapide à mettre en oeuvre et en adéquation avec les résultats *in vivo.*

Dans ce but, la durée de la modélisation de la digestion au niveau gastrique peut être comprise entre 30 minutes et 90 minutes, et peut notamment être de l'ordre de 70 minutes.

Modélisation de la digestion au niveau intestinal

Suite à l'étape de digestion gastrique, les conditions de l'enceinte réactionnelle sont ajustées pour représenter au mieux les conditions intestinales notamment en augmentant le pH du mélange jusqu'à une valeur comprise entre 5,5 et 7 et en ajoutant de 0,03 à 3 % en poids, de sels biliaires et de 0,04 à 4 % en poids de pancréatine, ces pourcentages étant exprimés en poids par rapport au poids du mélange contenu dans la cuve d'un réacteur, et en maintenant le mélange sous agitation pendant une durée allant de 1 à 8 heures, de préférence de 1 à 4 heures.

En particulier, le pH du mélange est augmenté par l'adjonction d'une solution basique concentrée. La base présente *in vivo* dans l'intestin est du bicarbonate de sodium. Cependant, cette base présente l'inconvénient de produire du gaz et donc de mousser lorsqu'elle est introduite dans la cuve du réacteur, même en une faible teneur et augmente ainsi la valeur de viscosité. Aussi, la base utilisée de manière préférée selon l'invention peut être de la soude concentrée, par exemple en une concentration molaire de l'ordre de 4N de manière à faire varier au minimum le volume modélisant le fluide intestinal.

La modélisation des conditions intestinales passe par l'adjonction de sels biliaires et de pancréatine.

Usuellement secrétés par le foie et stockés dans la vésicule biliaire, les sels biliaires permettent la fragmentation des gros globules de lipides alimentaires conduisant ainsi à la formation de microgouttelettes.

Les sels biliaires pouvant être utilisés dans la méthode selon l'invention sont notamment des sels biliaires d'origine porcine, tels que ceux commercialisés par la société Sigma Aldrich sous la dénomination Bile Extract porcine B8631.

Selon un mode préféré de réalisation, les sels biliaires sont présents en une teneur allant de 0,03 à 3 % en poids, par rapport au poids total de la solution, de préférence de 0,1 à 1,5 % en poids, et plus préférentiellement environ 0,3 % en poids.

La pancréatine est une enzyme issue du suc pancréatique.

La pancréatine pouvant être utilisée selon l'invention peut être une pancréatine issue du porc telle que la pancréatine P7545 commercialisée par la société Sigma Aldrich.

Selon un mode préféré de réalisation, la pancréatine est présente en une teneur allant de 0,04 à 4 % en poids, par rapport au poids total de la solution, de préférence de 0,1 à 1,5 % en poids, et plus préférentiellement environ 0,25 % en poids.

En particulier, les conditions intestinales peuvent être modélisées dans la même enceinte thermostatée que celle utilisée pour modéliser les conditions gastriques, pour maintenir le milieu intestinal à une température comprise entre 35 et 40°C, de préférence entre 36 et 39°C et plus préférentiellement entre 36 et 38°C, représentative de la température du petit intestin *in vivo* chez un mammifère monogastrique, et de l'homme notamment.

En particulier, la modélisation de l'étape de digestion au niveau intestinal peut comprendre les étapes suivantes :

a. Mélange sous forte agitation, par exemple 50 à 300 s$^{-1}$, pendant une durée de 2 à 30 minutes, au cours duquel le pH est ajusté dans le réacteur jusqu'à une valeur comprise entre 5 et 7.5 et sont ajoutés de 0,03 à 3 % en poids de sels biliaires et de 0,04 à 4 % en poids de pancréatine, ces pourcentages étant exprimés en poids par rapport au poids du mélange contenu dans la cuve du réacteur;

b. Maintien du mélange sous agitation, par exemple 1 à 100 s$^{-1}$, pendant une durée allant de 1 à 8 heures;

Le pH est maintenu entre 5 et 7, 5, et de préférence environ 6,3.

Préférentiellement, la modélisation des conditions intestinales s'effectue de manière automatique à l'aide d'une station de titrage comme précédemment décrite telle que la station Titralab 856 bi-burette associée à une bi-burette ABU52 et une pompe péristaltique, équipements disponibles auprès de la société Radiometer Analytical SAS

Préférentiellement, la modélisation automatique du fluide intestinal s'effectue à l'aide d'une burette dosant la quantité de base à ajouter dans la cuve pour obtenir la valeur de pH intestinal souhaitée, et d'une pompe péristaltique dosant une solution ou suspension de pancréatine et de sels biliaires. Ladite solution présente une teneur en pancréatine allant de 10 à 30% en poids par rapport au poids de ladite solution et une teneur en sels biliaires allant de 10 à 30% en poids par rapport au poids de ladite solution. En effet, à ces teneurs en pancréatine et sels biliaires, une suspension relativement visqueuse est obtenue, impossible à doser avec précision par une burette conventionnelle. Une pompe péristaltique est donc nécessaire afin de pouvoir doser précisément les quantités voulues. De plus, l'utilisation d'une pompe péristaltique est recommandée du fait du caractère partiellement insoluble des sels biliaires et de la pancréatine. La présence de particules insolubles ne perturbe pas le fonctionnement de la pompe péristaltique (dans la gamme de concentration précisée) mais serait susceptible de boucher les tuyaux connectés à la burette ou de générer des incertitudes de dosage.

La durée de la modélisation de la digestion au niveau intestinal peut être comprise entre 1 et 8 heures, et de préférence entre 1 et 4 heures. Comme déjà expliqué, la présente invention vise toutefois à proposer une méthode *in vitro* rapide à mettre en oeuvre et en adéquation avec les résultats *in vivo.*

Dans cette optique, la durée de la modélisation de la digestion au niveau intestinal sera comprise entre 1 et 2 heures, et notamment sera de l'ordre de 90 minutes.

Mesure du pH et de la température

La mesure continue du pH dans la méthode selon l'invention peut notamment être effectuée à l'aide d'un contrôleur PHM290 (Radiometer analytical) ou d'une station de titrage Titralab 856 (Radiometer analytical) interfacé à un ordinateur pour l'enregistrement en continu des données et d'une sonde pH de type pC2401-8.

Avant toute utilisation, la sonde est calibrée à l'aide de 2 solutions étalons : pH 4 et 7.

La sonde de pH est ensuite maintenue au dessus des pales de l'agitateur afin de ne pas perturber la mesure de viscosité.

De même, la température du milieu réactionnel peut être contrôlée en continu par le biais d'une sonde de température maintenue au dessus des pâles de la géométrie afin de ne pas perturber la mesure de viscosité.

Selon un mode particulièrement préféré, l'invention a pour objet une méthode *in vitro* modélisant et mesurant la consistance générée *in vivo* par un aliment sec au cours de sa digestion, comprenant les étapes suivantes :

a. Broyage de 20 à 200 g d'aliment sec jusqu'à obtention de particules de taille moyenne de l'ordre de 500 $\mu$m (mesure au tamis);

b. Préparation d'une solution modélisant le fluide gastrique comprenant de 250 à 450 mL d'eau maintenue à un pH acide compris entre 1 et 4 et une enzyme protéolytique par exemple de type pepsine, ladite enzyme étant présente en une teneur d'environ 0,25 % en poids de la solution de fluide gastrique ;

c. Mélange sous agitation de l'aliment obtenu en a. à la solution obtenue en b. dans la cuve d'un réacteur couplé à un rhéomètre, pendant une durée allant de l'ordre de 70 minutes, ledit réacteur étant maintenu à une température de l'ordre de 37°C ;

d. Ajustement du pH dans le réacteur jusqu'à une valeur d'environ 6,3 et ajout de 0,3 % en poids, de sels biliaires et de 0,4 % en poids de pancréatine, ces pourcentages étant exprimés en poids par rapport au poids du mélange contenu dans la cuve d'un réacteur, et maintien du mélange sous agitation pendant une durée d'environ 90 minutes,

**caractérisée en ce que** le rhéomètre est équipé d'un agitateur de géométrie hélicoïdale permettant d'homogénéiser le mélange et d'en mesurer la viscosité et/ou la viscoélasticité.

En particulier, l'invention a pour objet une méthode *in vitro* modélisant et mesurant la consistance générée *in vivo* par un aliment au cours de sa digestion, comprenant les étapes suivantes :

a. Broyage de l'aliment jusqu'à obtention de particules de tailles comprises entre 5 microns et 3 mm ;

b. Préparation d'une solution modélisant le fluide gastrique comprenant de l'eau maintenue à un pH acide compris entre 1 et 4 et une enzyme protéolytique par exemple de type pepsine, ladite enzyme étant présente en une teneur allant de 0,025 à 2,5 % en poids de la solution de fluide gastrique ;

c. Mélange sous forte agitation, par exemple entre 50 et 300 s$^{-1}$, de l'aliment obtenu en a. à la solution obtenue en b. dans la cuve d'un réacteur couplé à un rhéomètre, pendant une durée allant de 2 à 30 minutes , ledit réacteur étant maintenu à une température comprise entre 35 à 40°C, puis ajustement du pH à la valeur cible comprise entre 1 et 4 ;

d. Mélange sous agitation, par exemple entre 1 et 100 s$^{-1}$, dans la cuve du réacteur couplé à une mesure de viscosité et/ou de viscoélasticité, pendant une durée comprise de 30 minutes à 4 heures, à une température comprise entre 36°C et 38°C ;

e. Réalisation d'une courbe d'écoulement par augmentation progressive de la vitesse de cisaillement de 0,01 s$^{-1}$ à 1000 s$^{-1}$ pendant 1 à 10 minutes, puis diminution progressive de la vitesse de cisaillement entre 1000 s$^{-1}$ et 0,01 s$^{-1}$ pendant 1 à 10 minutes.

f. Mélange sous forte agitation, par exemple entre 50 et 300 s$^{-1}$, pendant une durée de 2 minutes à 30 minutes, au cours duquel le pH est ajusté dans le réacteur jusqu'à une valeur comprise entre 5 et 7.5 et sont ajoutés de 0,03 à 3 % en poids, de sels biliaires et de 0,04 à 4 % en poids de pancréatine, ces pourcentages étant exprimés en poids par rapport au poids du mélange contenu dans la cuve du réacteur,

g. Maintien du mélange sous agitation, par exemple entre 1 et 100 s$^{-1}$, pendant une durée allant de 1 à 8 heures à une température comprise entre 36°C et 38°C, puis

h. Réalisation d'une courbe d'écoulement par augmentation progressive de la vitesse de cisaillement de 0,01 s$^{-1}$ à 1000 s$^{-1}$ pendant 1 à 10 minutes, puis diminution progressive de la vitesse de cisaillement entre 1000 s$^{-1}$ et 0,01 s$^{-1}$ pendant 1 à 10 minutes.

Le rhéomètre étant équipé d'un agitateur permettant d'homogénéiser le mélange et d'en mesurer la viscosité et/ou la viscoélasticité.

Comme explicité précédemment, les appareils et les méthodes de mesure de viscosité connus de l'art antérieur ne permettent pas de mesurer l'évolution de la viscosité dans un milieu fluide hétérogène de manière continue.

La présente invention a donc pour objet, selon un autre aspect, une méthode de mesure en continu de la consistance d'un mélange dans la cuve d'un réacteur **caractérisée en ce que** l'appareil de mesure de la viscosité et/ou la viscoélasticité est équipé d'un agitateur permettant d'homogénéiser le mélange et d'en mesurer la viscosité et/ou la viscoélasticité, ledit agitateur se composant d'au moins une pale hélicoïdale entrainée en rotation autour d'un axe sensiblement vertical, correspondant à celui du réacteur et d'une barre de support radiale et perpendiculaire à l'axe, située à l'extrémité inférieure dudit axe, tel que défini précédemment.

La présente invention a également pour objet un rhéomètre équipé d'un agitateur permettant d'homogénéiser le mélange et d'en mesurer la viscosité et/ou la viscoélasticité, ledit agitateur comprenant au moins une pale hélicoïdale entrainée en rotation autour d'un axe sensiblement vertical, correspondant à celui du réacteur et une barre de support radiale et perpendiculaire à l'axe, située à l'extrémité inférieure dudit axe, tel que défini précédemment.

L'invention a également pour objet un appareil permettant la mesure et la modélisation *in vitro* de la consistance générée *in vivo* par un aliment au cours de sa digestion, comprenant un rhéomètre équipé d'un agitateur permettant d'homogénéiser le mélange et d'en mesurer la viscosité et/ou la viscoélasticité, ledit agitateur comprenant au moins une pale hélicoïdale entrainée en rotation autour d'un axe sensiblement vertical, correspondant à celui de la cuve du réacteur et une barre de support radiale et perpendiculaire à l'axe, située à l'extrémité inférieure dudit axe, tel que défini précédemment.

Les figures 1, 2 et 3 représentent des agitateurs selon l'invention comprenant une ou deux pales hélicoïdales, vus de côté en élévation.

La figure 4 représente différentes étapes du protocole de digestion in vitro;

La figure 5 représente l'évolution cinétique de viscosité obtenue avec un biscuit et une biscotte riche en fibres (quantité incorporée : 100g dans 350 ml). Les phases gastriques et intestinales sont représentées en trait épais;

La figure 6 représente l'évolution cinétique de viscosité obtenue avec un biscuit commercial et un prototype contenant 6% de gomme guar native (quantité incorporée : 50g dans 400 ml). Les phases gastriques et intestinales sont représentées en trait épais.

La figure 7 représente l'évolution cinétique de viscosité obtenue avec un prototype contenant 6% de gomme guar native (quantité incorporée : 50g dans 400 ml). 3 vitesses différentes ont été utilisées dans les phases gastriques et intestinales, représentées en trait épais.

La figure 8 représente la courbe d'écoulement obtenue en fin de phase gastrique avec un prototype contenant 6% de guar natif (quantité incorporée : 50g dans 400 ml). Les carrés blancs représentent les valeurs moyennes de viscosité apparente mesurées pendant les phases intestinales aux différentes vitesses (1, 10 et 100 s$^{-1}$).

La figure 9 représente la courbe d'écoulement obtenue en fin de phase intestinale avec un prototype contenant 6% de guar natif (quantité incorporée : 50g dans 400 ml). Les carrés blancs représentent les valeurs moyennes de viscosité apparente mesurées pendant les phases intestinales aux différentes vitesses (1, 10 et 100 s$^{-1}$).

La figure 10 représente l'évolution des modules viscoélastiques pendant la digestion artificielle en condition gastrique d'un son d'avoine incorporé à hauteur de 40g dans 408ml de liquide.

La figure 11 représente l'évolution des modules viscoélastiques durant un balayage en déformation (de 0.1 à 100 %) effectué après 15h de digestion gastrique pour un son d'avoine incorporé à hauteur de 40g dans 408ml

Les figures 12 et 13 représentent respectivement une vue de face et une vue de dessus d'un couvercle de cuve percé de trous afin d'accommoder différentes sondes.

La présente invention sera illustrée plus en détails dans les exemples ci-après.


**Exemple 1 : comparaison entre une biscotte (Heudebert Fibres +) et un biscuit (Lu Petit Déjeuner Coco Noisettes)**

Une quantité de 100g de biscuit ou de biscotte a été broyée pendant 20 secondes dans un broyeur ménager (SEB Rondo 500). Le protocole suivant a ensuite été utilisé :

a) préparation du fluide gastrique simplifié (dissolution de 0,25% de pepsine et ajustement du pH à 2) avec agitation à 100 s$^{-1}$ pendant 5 minutes,

b) dispersion de la poudre à 150 s$^{-1}$ pendant 20 minutes, puis ajustement à pH2,

c) phase gastrique à 10 s$^{-1}$ pendant 70 minutes,

d) courbe d'écoulement de 0,01 s$^{-1}$ à 150 s$^{-1}$ puis retour de 150 s$^{-1}$ à 0,01 s$^{-1}$. Le cycle est effectué en 6 minutes (trois minutes pour la courbe aller et trois minutes pour la courbe retour),

e) passage en conditions intestinales avec remontée du pH à 6.3, ajout de 0,4% de pancréatine et 0,3% de sels biliaires,

f) phase intestinale à 10 s$^{-1}$ pendant 90 minutes,

g) courbe d'écoulement de 0,01 s$^{-1}$ à 150 s$^{-1}$ puis retour de 150 s$^{-1}$ à 0,01 s$^{-1}$. Le cycle est effectué en 6 minutes.

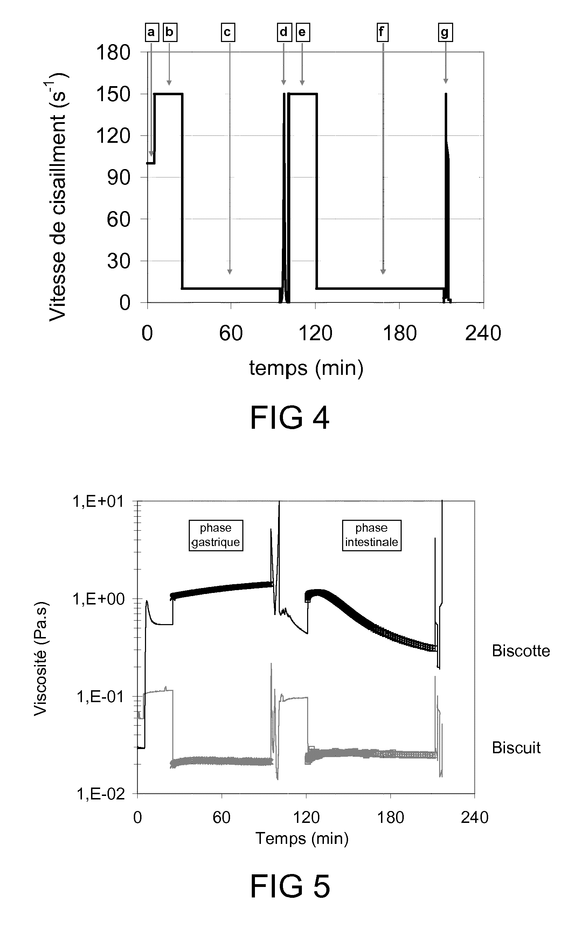

La figure 4 montre les différentes phases du test.

La figure 5 montre le profil de viscosité obtenu, les phases gastriques (c) et intestinales (f) étant distinguées par un trait plus épais (cf graphe). Les comportements observés sont très différents entre le biscuit et la biscotte.

Le biscuit Petit Déjeuner génère une faible augmentation de viscosité et une évolution très limitée entre les phases gastriques et intestinales.

La biscotte génère une viscosité significativement plus élevée et qui augmente jusqu'au début de la phase intestinale, suite à quoi, une chute progressive est observée.

Ces résultats peuvent être interprétés sur la base de l'état de l'amidon dans le produit. L'amidon est plus ou moins totalement gélatinisé dans la biscotte, car le procédé de fabrication implique une hydratation importante de la pâte et deux traitements thermiques successifs. Lors de la dispersion en conditions gastriques, le développement de viscosité est dû à la solubilisation des chaînes d'amylose, qui sont des polysaccharides linéaires de forte masse molaire. En conditions intestinales, la chute progressive de viscosité est vraisemblablement due à l'hydrolyse de l'amidon par la pancréatine intestinale. Une telle dégradation de l'amidon gélatinisé par la pancréatine a déjà été confirmée par d'autres tests in vitro, montrant par exemple l'apparition de glucides simples (Englyst K. N., Hudson G. J., Englyst H. N., 2000, Encyclopedia of Analytical Chemistry., Meyers R. A. Chichester: John Wiley & Sons Ltd, 2000: 4246-4262). La méthodologie développée permet d'obtenir une signature rhéologique de ce processus, qui complète les résultats de l'art antérieur.

Dans le cas d'un biscuit Lu Petit Déjeuner, la structure pseudo-cristalline native de l'amidon est préservée ou seulement faiblement altérée. Les variations de viscosité dans les phases gastriques et intestinales sont donc très limitées, l'amylose restant au sein des grains d'amidon. Ceci confirme les mesures réalisées in vitro (par exemple sur la base de la méthodologie d'Englyst mentionnée plus haut) et in vivo, notamment les mesures d'index glycémique, montrant une libération lente et progressive de glucose et donc un amidon lentement digestible pour ces biscuits.

**Exemple 2 : incorporation de gomme guar native dans un biscuit**

Les conditions opératoires sont identiques à celles de l'exemple 1, à l'exception d'une quantité de biscuit incorporée plus faible : 50g dans 400 ml de fluide gastrique.

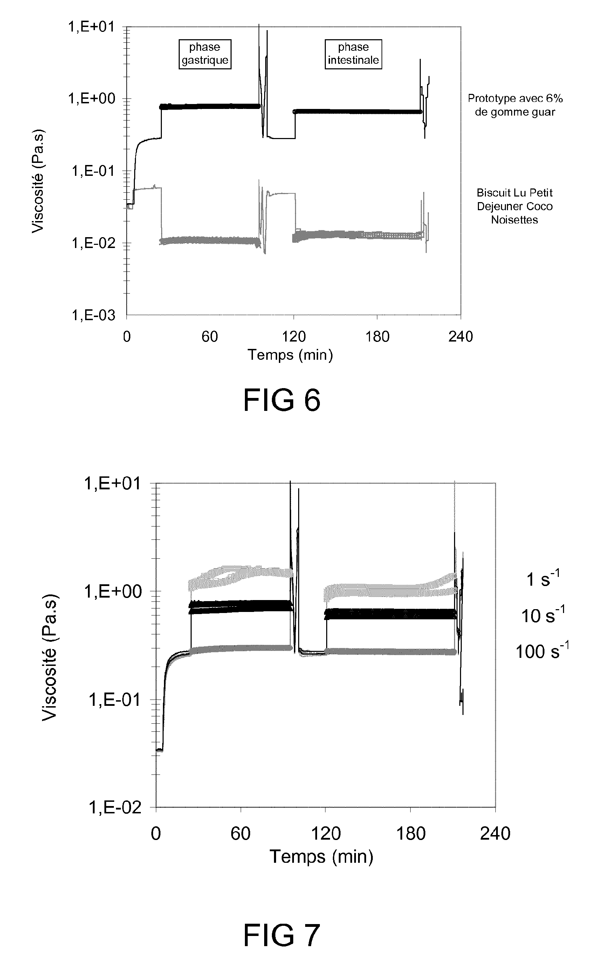

La figure 6 montre l'évolution comparée de la viscosité pour un biscuit contrôle (Lu Petit Déjeuner Coco Noisettes) et un biscuit prototype contenant 6% de gomme guar native.

Les évolutions cinétiques sont comparables, en ce sens qu'un plateau de viscosité est rapidement atteint. La gomme guar est un polysaccharide soluble dans l'eau froide, ce qui explique que la dissolution de la gomme guar soit rapide à 37°C.

La viscosité apparente (à 10 s$^{-1}$) du biscuit à la gomme guar est 50 fois supérieure à celle du biscuit sans gomme guar en conditions gastriques et proche de la viscosité de la biscotte de l'exemple 1. Cependant, contrairement à la biscotte, la viscosité du biscuit à la gomme guar ne chute pas en conditions intestinales. Ceci s'explique par le fait que la gomme guar n'est pas sensible aux enzymes digestives et se comporte comme une fibre alimentaire. Le protocole in vitro permet donc bien de retrouver que la viscosité de fibres alimentaires n'est pas affectée par les conditions de digestion dans l'intestin grêle.

**Exemple 3 : impact de la vitesse d'agitation sur la cinétique d'évolution de la viscosité**

Les conditions opératoires sont les mêmes que celles de l'exemple 2, à l'exception des vitesses d'agitation dans les phases gastriques et intestinales, qui varient entre 3 valeurs : 1, 10 et 100 s$^{-1}$, avec deux répétitions pour chacune de ces vitesses.

Le biscuit contenant 6% de gomme guar native de l'exemple 2 est incorporé à hauteur de 50g dans 400 ml de fluide gastrique. La figure 7 montre les résultats obtenus :

Quelle que soit la vitesse, la dissolution du guar est terminée après les 20 minutes de dispersion à 150 s$^{-1}$ et 37°C. La viscosité est constante au niveau des phases gastrique et intestinale. Cependant, les viscosités apparentes mesurées avec une vitesse de 1 s-1 sont irrégulières, ce qui pourrait traduire des mouvements lents du mélange réactionnel. A 10 s$^{-1}$ et 100 s$^{-1}$, on observe un niveau de viscosité plus faible que celui à 1 s$^{-1}$, mais plus régulier et plus reproductible.

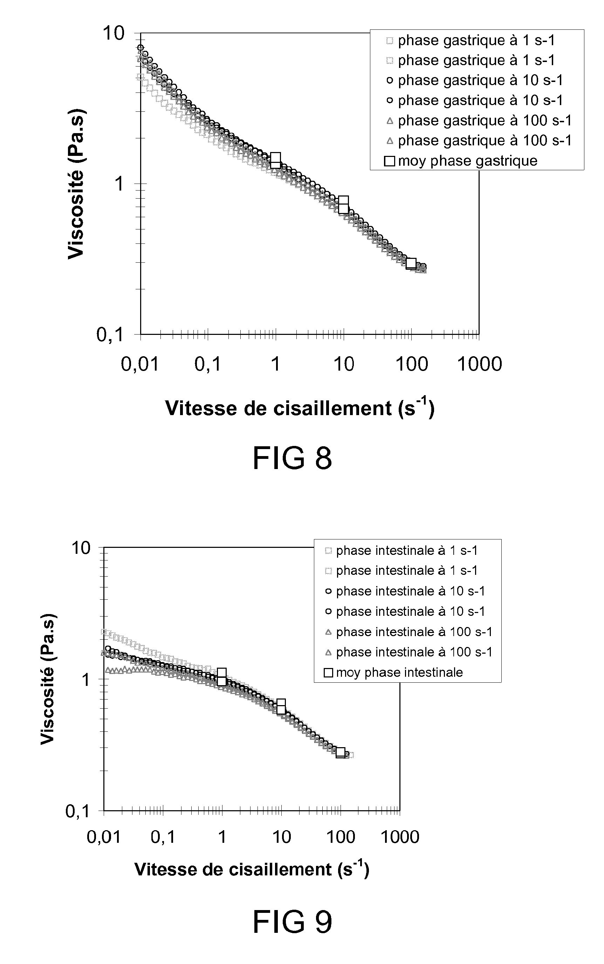

Les courbes d'écoulement obtenues à la fin des phases gastriques et intestinales après agitation aux vitesses indiquées (1, 10 et 100 s$^{-1}$) sont montrées sur les figures 8 et 9. La viscosité apparente moyenne mesurée dans les phases gastriques et intestinales aux trois vitesses est également reportée.

Les courbes d'écoulement sont quasiment superposables, malgré des différences significatives de valeurs de viscosité apparente dans les phases gastriques et intestinales, selon la vitesse de cisaillement.

Ce résultat montre que la cinétique de solubilisation de la gomme guar native ne dépend pas de la vitesse de cisaillement appliquée pendant la phase gastrique, qui varie pourtant entre 1 et 100 s$^{-1}$. Les variations de viscosité apparente observées sont liées au caractère rhéo-fluidifiant des solutions de gomme guar (c'est-à-dire à la diminution de viscosité apparente avec la vitesse de cisaillement). Ceci est confirmé par le fait que les valeurs moyennes obtenues dans les phases gastriques et intestinales (symbolisées par des carrés vides sur les figures 5 et 6) se superposent bien avec les courbes d'écoulement obtenues à la fin de ces phases.

**Exemple 4 : mesure de l'évolution de la viscoélasticité en conditions de digestion artificielle.**

Une quantité de 40g de son d'avoine Oatwell 22 (Swedish Oat Fibers -SOF- et CreaNutrition), de granulométrie médiane environ 120 microns, a été utilisée en remplacement de la poudre de biscuit broyé des exemples 1 à 3. Le protocole suivant a été utilisé :

a) préparation du fluide gastrique simplifié en utilisant les burettes automatiques :

Une quantité d'eau déminéralisée de 408 mL est d'abord ajoutée aux 40g de son, ce qui correspond à une concentration en son de 8.9 (en % poids/poids).
3 ml de solution concentrée de pepsine à pH 2 sont ensuite dosés.
Dès la fin de cet ajout, le contenu de la cuve est acidifié à la valeur cible de pH 2. Le temps total de ce cycle est d'environ 5 minutes.

b) dispersion de la poudre de son à 150 s$^{-1}$ pendant 20 minutes, puis, avant la fin de cette phase, ajustement de nouveau à pH 2 en utilisant la burette automatique.
c) arrêt de l'écoulement et réalisation de mesures harmoniques à une fréquence constante de 1Hz et une déformation imposée de 0.1%. Le temps total de cette phase est de 15 heures.
d) réalisation d'un balayage en déformation de 0.1 à 100% à 1 Hz pendant 3 minutes.

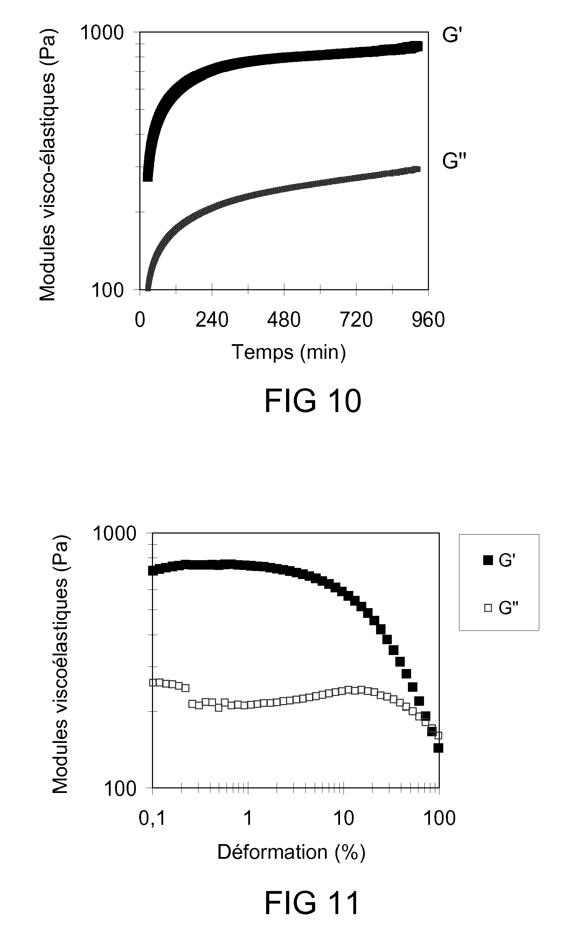

La figure 10 montre l'évolution des modules viscoélastiques pendant la digestion artificielle. On observe que, dès le début de la cinétique, le module élastique est supérieur au module visqueux (à la fréquence et déformation considérées), ce qui indique un caractère solide dominant. Les modules viscoélastiques augmentent ensuite de manière progressive au cours du temps (un facteur environ 3 en 15h), ce qui montre que l'échantillon continue à se structurer.

Le balayage en déformation obtenu après 15h en condition gastriques est montré figure 11. Le module élastique reste supérieur au module visqueux sur une large plage de déformation, puis à des déformations supérieures à environ 80%, les modules viscoélastiques se croisent et le caractère visqueux devient dominant.

L'ensemble de ces observations suggèrent un comportement rhéologique de type « gel faible », avec un caractère solide dominant aux faibles déformations et un caractère liquide dominant au-delà d'une déformation critique.

**Revendications**

1. Méthode *in vitro* modélisant et mesurant la consistance générée *in vivo* par un aliment au cours de sa digestion, comprenant les étapes suivantes :

a. Broyage de l'aliment pour reproduire la dégradation mécanique opérée au cours de la mastication,
b. Mélange sous agitation de l'aliment broyé à une solution modélisant le fluide gastrique dans la cuve d'un réacteur couplée à un rhéomètre, pendant une durée correspondant à la digestion gastrique,
c. Ajustement sous agitation du mélange réactionnel pour modéliser les conditions de digestion intestinale pendant une durée correspondant à la digestion intestinale,
le rhéomètre étant muni d'un agitateur permettant d'homogénéiser le mélange et d'en mesurer la viscosité et/ou la viscoélasticité.

2. Méthode selon la revendication 1, **caractérisée par le fait que**, lorsque l'on mesure la viscosité du mélange, le rhéomètre homogénéise le mélange et en mesure la viscosité de manière simultanée

3. Méthode selon la revendication 1, **caractérisée par le fait que**, lorsque l'on mesure la viscoélasticité du mélange, le rhéomètre homogénéise le mélange et en mesure la viscoélasticité de manière consécutive.

4. Méthode selon l'une quelconque des revendications précédentes, dans laquelle l'aliment est un aliment sec.

5. Méthode selon l'une quelconque des revendications précédentes, dans laquelle l'aliment obtenu à l'issue de l'étape de broyage se présente sous la forme de particules de taille d'au moins 5 $\mu$m, de préférence comprise entre 5$\mu$m et 3 mm, et de préférence de l'ordre de 500 à 700 $\mu$m.

6. Méthode selon l'une quelconque des revendications précédentes, dans laquelle la solution modélisant le fluide gastrique comprend de l'eau maintenue à un pH acide compris entre 1 et 4 et une enzyme protéolytique, par exemple de type pepsine, ladite enzyme étant présente en une teneur allant de 0,025 à 2,5 % en poids de la solution de fluide gastrique.

7. Méthode selon l'une quelconque des revendications précédentes, dans laquelle le mélange entre l'aliment broyé et la solution modélisant le fluide gastrique s'effectue sous agitation au sein d'une enceinte réactionnelle thermostatée maintenant le milieu à une température de 35 à 40°C, de préférence 36 à 39°C, et plus préférentiellement de l'ordre de 37°C, pendant une durée allant de 30minutes à 4 heures, ladite enceinte étant couplée à un appareil de mesure de la viscosité et/ou la viscoélasticité.

8. Méthode selon l'une quelconque des revendications précédentes, dans laquelle la modélisation des conditions de digestion intestinale s'effectue par ajustement du pH dans le réacteur jusqu'à une valeur comprise entre 5 et 7.5 et ajout de 0,03 à 3 % en poids de sels biliaires et de 0,04 à 4 % en poids de pancréatine, ces pourcentages étant exprimés en poids par rapport au poids du mélange contenu dans la cuve du réacteur, ledit mélange étant maintenu sous agitation pendant une durée allant de 1 à 8 heures, de préférence allant de 1 à 4 heures.

9. Méthode selon l'une quelconque des revendications précédentes, **caractérisée en ce que** l'agitateur se compose d'au moins une pale hélicoïdale (1) entrainée en rotation autour d'un axe vertical (2), correspondant à celui de la cuve du réacteur, et d'une barre de support (3) perpendiculaire à l'axe, située à l'extrémité inférieure dudit axe.

10. Méthode selon la revendication 9, **caractérisée en ce que** l'agitateur comprend entre 2 et 6 pales hélicoïdales coaxiales, disposées de manière symétrique par rapport à l'axe vertical.

11. Méthode selon l'une quelconque des revendications 9 ou 10, **caractérisée en ce que** la (ou les) pale(s) hélicoïdale (s) comprend entre un demi et plusieurs pas ou spires d'hélice, de préférence 1 pas.

12. Méthode selon l'une quelconque des revendications 9 à 11, **caractérisée en ce que** l'agitateur comprend deux pales hélicoïdales coaxiales, symétriques par rapport à l'axe vertical (2), comprenant une spire d'hélice, connectées entre elles au niveau de leur extrémité inférieure par la barre de support (3), au niveau de leur extrémité supérieure par la seconde barre radiale (4), parallèle à la barre de support, et à hauteur d'une demi-spire, par une troisième barre (5) parallèle à la barre de support.

13. Méthode selon l'une quelconque des revendications 9 à 12, **caractérisée en ce que** l'agitateur est en acier inoxydable.

14. Méthode selon l'une quelconque des revendications précédentes, **caractérisée en ce que** les étapes de mesure de la viscoélasticité, lorsque la consistance du bol devient viscoélastique, sont réalisées par des mesures oscillatoires à faible déformation.

15. Méthode selon la revendication 14, **caractérisée en ce que** les étapes de mesure de la viscoélasticité, lorsque la consistance du bol devient viscoélastique en phase gastrique et/ou intestinale, comprend les étapes suivantes :

- Obtention d'un mélange plus ou moins homogène dans la phase gastrique et/ou intestinale
- Mesure de la viscoélasticité de la phase gastrique et/ou intestinale par des mesures oscillatoires effectuant une déformation sinusoïdale comprise entre 0,01 % et 1%, de préférence 0,1 %, à une fréquence de 0,01 Hz à 10 Hz, de préférence environ 1Hz.

16. Méthode de mesure en continu de la consistance d'un mélange, **caractérisée en ce qu'**elle utilise un appareil de mesure de la viscosité et/ou la viscoélasticité équipé d'un agitateur tel que défini à l'une des revendications 9 à 13.

17. Rhéomètre équipé d'un agitateur tel que défini à l'une des revendications 9 à 13.

18. Appareil permettant la mesure et la modélisation *in vitro* de la consistance générée *in vivo* par un aliment au cours de sa digestion, comprenant un rhéomètre selon la revendication 17.

FIG. 1

FIG. 2

FIG. 3

FIG 4

FIG 5

FIG 6

FIG 7

FIG 8

FIG 9

FIG 10

FIG 11

EP 2 538 399 A1

FIG 12

FIG 13

24

**Europäisches Patentamt**
**European Patent Office**
**Office européen des brevets**

# RAPPORT DE RECHERCHE EUROPEENNE

Numéro de la demande

EP 12 18 4876

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | US 5 525 305 A (MINEKUS MANNES [NL] ET AL) 11 juin 1996 (1996-06-11) * revendications 1-3; figures 1-4 * * abrégé * | 1-18 | INV. G09B23/32 |
| A | DE 40 42 298 A1 (SCHREIBER HANS [DE]) 2 juillet 1992 (1992-07-02) * le document en entier * | 1-18 | |
| A | US 2007/037276 A1 (DE CRECY EUDES FRANCOIS MARIE [US]) 15 février 2007 (2007-02-15) * le document en entier * | 1-18 | |
| A | WO 99/28437 A (TAM YUN K [CA]; ANDERSON KEITH EDWARD [DK]) 10 juin 1999 (1999-06-10) * le document en entier * | 1-18 | |
| A | WO 98/51236 A (CEDARS SINAI MEDICAL CENTER [US]) 19 novembre 1998 (1998-11-19) * le document en entier * | 1-18 | DOMAINES TECHNIQUES RECHERCHES (IPC) G09B |

Le présent rapport a été établi pour toutes les revendications

| Lieu de la recherche | Date d'achèvement de la recherche | Examinateur |
|---|---|---|
| Munich | 18 octobre 2012 | Mennerun, Steeve |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 12 18 4876

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-10-2012

| Document brevet cité au rapport de recherche | | Date de publication | Membre(s) de la famille de brevet(s) | | | Date de publication |
|---|---|---|---|---|---|---|
| US 5525305 | A | 11-06-1996 | AT | 163140 | T | 15-02-1998 |
| | | | DE | 69316981 | D1 | 19-03-1998 |
| | | | DE | 69316981 | T2 | 10-06-1998 |
| | | | EP | 0642382 | A1 | 15-03-1995 |
| | | | JP | H07502688 | A | 23-03-1995 |
| | | | NL | 9201907 | A | 01-06-1994 |
| | | | US | 5525305 | A | 11-06-1996 |
| | | | WO | 9409895 | A1 | 11-05-1994 |
| DE 4042298 | A1 | 02-07-1992 | AUCUN | | | |
| US 2007037276 | A1 | 15-02-2007 | AU | 2007277105 | A1 | 31-01-2008 |
| | | | CA | 2658126 | A1 | 31-01-2008 |
| | | | EP | 2049653 | A2 | 22-04-2009 |
| | | | JP | 2009544323 | A | 17-12-2009 |
| | | | KR | 20090050060 | A | 19-05-2009 |
| | | | RU | 2009107209 | A | 10-09-2010 |
| | | | US | 2007037276 | A1 | 15-02-2007 |
| | | | US | 2012184009 | A1 | 19-07-2012 |
| | | | WO | 2008013967 | A2 | 31-01-2008 |
| WO 9928437 | A | 10-06-1999 | AT | 258221 | T | 15-02-2004 |
| | | | AU | 1328499 | A | 16-06-1999 |
| | | | CA | 2312833 | A1 | 10-06-1999 |
| | | | CN | 1284127 | A | 14-02-2001 |
| | | | DE | 69821259 | D1 | 26-02-2004 |
| | | | DE | 69821259 | T2 | 18-11-2004 |
| | | | DK | 1034251 | T3 | 17-05-2004 |
| | | | EP | 1034251 | A1 | 13-09-2000 |
| | | | ES | 2214751 | T3 | 16-09-2004 |
| | | | HK | 1034993 | A1 | 05-08-2005 |
| | | | US | 6022733 | A | 08-02-2000 |
| | | | WO | 9928437 | A1 | 10-06-1999 |
| WO 9851236 | A | 19-11-1998 | EP | 0984740 | A1 | 15-03-2000 |
| | | | JP | 2001525705 | A | 11-12-2001 |
| | | | US | 5993406 | A | 30-11-1999 |
| | | | US | 6379619 | B1 | 30-04-2002 |
| | | | WO | 9851236 | A1 | 19-11-1998 |

Pour tout renseignement concernant cette annexe : voir Journal Officiel de l'Office européen des brevets, No.12/82

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5525305 A

**Littérature non-brevet citée dans la description**

- **HOAD CL ; RAYMENT P. ; SPILLER RC ; MARCIANI L. ; DE CELIS ALONSO B. ; TRAYNOR C. ; MELA D.J. ; PETERS H.P.F. ; GOWLAND P.A.** In vivo imaging of intragastric gelation and its effect on satiety in humans. *J. Nutr,* 2004, 2293-2300
- **EDWARDS C.A. ; CRAIGEN L. ; DAVISON P. ; TOMLIN J. ; SUGDEN K. ; JOHNSON I.T. ; READ W.** Viscosity of food gums determined in vitro related to their hypoglycaemic actions. *Am J Clin Nutr,* 1987, 7
- **DE STEFFE, J. F.** Rheological Methods in Food Process Engineering. Freeman Press, 1992
- **AIT-KADI, A. ; MARCHAL, PH. ; CHOPLIN, L. ; CHRISSEMANT, A.S. ; BOUSMINA, M.L.** *Canadian Journal of Chemical Engineering,* 2002, vol. 80 (6), 1166-1174
- **ENGLYST K. N. ; HUDSON G. J. ; ENGLYST H. N.** Encyclopedia of Analytical Chemistry. John Wiley & Sons Ltd, 2000, 4246-4262